# FASCICULE DE BREVET EUROPEEN

(11) **EP 3 380 579 B1**
(45) Date de publication et mention de la délivrance du brevet: **28.06.2023**
(21) Numéro de dépôt: 16815602.4
(22) Date de dépôt: 25.11.2016
(51) Int. Cl.: C09K 8/52

(54) **COMPOSITION POUR LIMITER LA FORMATION ET/OU L'AGGLOMERATION D'HYDRATES DE GAZ**
ZUSAMMENSETZUNG ZUR BEGRENZUNG DER BILDUNG UND/ODER AGGLOMERATION VON GASHYDRATEN
COMPOSITION FOR LIMITING THE FORMATION AND/OR AGGLOMERATION OF GAS HYDRATES

(30) Priorité: 27.11.2015 FR 1561489
(43) Date de publication de la demande: 03.10.2018
(73) Titulaire: Arkema France, 92700 Colombes (FR)
(72) Inventeur: POU, Tong Eak, 69540 Irigny (FR); MOSER, Frédéric, 69310 Pierre-Benite (FR); BARRETO, Gilles, 69510 Messimy (FR); GILLET, Jean-Philippe, 69530 Brignais (FR)
(86) Numéro de dépôt international: PCT/FR2016/053093
(87) Numéro de publication internationale: WO 2017/089724

(56) Documents cités:
- WO-A1-94/24413
- WO-A1-95/19408
- FR-A1- 2 979 632
- US-A1- 2014 094 393

## Description

La présente invention porte sur une composition comprenant un ou plusieurs aminoacides carboxyliques de structure particulière, et un ou plusieurs tensioactifs non ioniques.

La présente invention concerne également un procédé pour limiter, voire empêcher la formation et/ou l'agglomération d'hydrates de gaz, mettant en oeuvre une composition telle que définie précédemment.

Enfin la présente invention a également pour objet l'utilisation d'une composition, telle que définie précédemment, pour limiter, voire empêcher la formation et/ou l'agglomération d'hydrates de gaz.

La production de pétrole et/ou de gaz et/ou de condensats se fait dans différents environnements, et notamment dans des sites offshores et/ou dans des sites connaissant des périodes météorologiques froides, ce qui conduit à un refroidissement important des fluides produits au contact des parois froides des conduites de transport.

On entend par fluides produits les fluides comprenant le pétrole, les gaz, les condensats, l'eau et leurs mélanges.

Par pétrole, on entend au sens de la présente invention du pétrole brut, c'est-à-dire non raffiné, provenant d'un gisement.

Par gaz, on entend au sens de la présente invention des gaz naturels bruts, c'est-à-dire non traités, directement extrait d'un gisement, tels que par exemple des hydrocarbures, comme du méthane, de l'éthane, du propane, du butane, du sulfure d'hydrogène, du dioxyde de carbone et d'autres composés gazeux dans les conditions d'exploitation, ainsi que leurs mélanges. La composition du gaz naturel extrait varie considérablement selon les puits. Ainsi, le gaz peut comprendre des hydrocarbures gazeux, de l'eau et d'autres gaz.

Par condensats, on entend au sens de la présente invention des hydrocarbures de densité intermédiaire. Les condensats comprennent généralement des mélanges d'hydrocarbures, qui sont liquides dans les conditions d'exploitation.

Il est connu, que ces fluides de production, ou fluides produits comportent le plus souvent une phase aqueuse. L'origine de cette phase aqueuse peut être endogène et/ou exogène au réservoir souterrain contenant les hydrocarbures, la phase aqueuse exogène provenant généralement d'une injection d'eau (eau d'injection).

L'épuisement des sites anciennement découverts conduit aujourd'hui l'industrie pétrolière et gazière à produire, notamment sur de nouveaux sites, avec souvent des profondeurs de plus en plus importantes pour les sites offshores et avec des météorologies toujours plus extrêmes.

Sur les sites offshores, les conduites de transport des fluides produits, notamment en fond de mer, sont de plus en plus profondes pour atteindre des profondeurs où l'eau de mer est à des températures inférieures à 15°C, inférieures à 10°C, voire proches de ou égale à 4°C.

De même sur les sites situés dans certaines zones géographiques, l'air ou l'eau de surface peut être froid(e), typiquement en dessous de 15°C, ou en-dessous de 10°C. Or, à de telles températures, les fluides produits subissent un refroidissement important lors de leur transport. Ce refroidissement peut être encore amplifié dans le cas d'un arrêt ou d'un ralentissement de production, cas dans lesquels le temps de contact entre les fluides produits et les parois froides de la conduite augmente.

Lorsque la température des fluides produits baisse, l'industrie d'extraction de ces fluides est couramment confrontée à la formation de clathrates, également appelés cristaux d'hydrates, hydrates de gaz ou tout simplement hydrates. Le risque pour l'industrie d'extraction de ces fluides et notamment d'extraction pétrolière, gazière et de condensats est d'autant plus grand que la température des fluides de production est basse et que la pression de ces fluides est élevée.

Ces problèmes de formation et/ou d'agglomération d'hydrates peuvent également être rencontrés au sein des boues de forage ou au sein des fluides de complétion, lors d'une opération de forage ou d'une opération de complétion.

Ces clathrates sont des cristaux solides (semblables à ceux de la glace) formés par des molécules d'eau, également nommées « receveur », autour d'une ou plusieurs molécules de gaz, également nommées « invités », tel que le méthane, l'éthane, le propane, butane, le gaz carbonique ou l'hydrogène sulfuré.

La formation et la croissance des cristaux d'hydrates, induites par un abaissement de la température des fluides de production, qui sortent chauds du réservoir géologique qui les contient et qui entrent dans une zone froide, peuvent provoquer le colmatage ou le bouchage des conduites de production, des conduites de transport des hydrocarbures (pétrole, condensats, gaz) ou de vannes, clapets et autres éléments susceptibles d'être bouchés totalement ou au moins partiellement. Ces colmatages/bouchages peuvent conduire à des pertes de production de pétrole, de condensats et/ou de gaz, entraînant des pertes économiques non négligeables, voire très importantes. En effet, ces colmatages et/ou bouchages auront pour conséquence une diminution du débit de production, voire un arrêt de l'unité de production. En cas, de bouchage la recherche de la zone du bouchon et son élimination auront pour conséquence une perte de temps et de profit pour cette unité. Ces colmatages et/ou bouchages peuvent également entraîner des dysfonctionnements sur des éléments de sécurité (vannes de sécurité par exemple).

Pour diminuer, retarder ou inhiber la formation et/ou l'agglomération d'hydrates, diverses solutions ont déjà été proposées ou envisagées. Parmi celles-ci, on peut notamment citer une première solution qui consiste à déshydrater le pétrole brut ou le gaz en amont de la zone de la conduite où la température favorise la formation de ces hydrates. Cette solution est cependant difficile, voire impossible, à mettre en oeuvre dans des conditions économiques satisfaisantes.

Une seconde approche, également très onéreuse, consiste à maintenir la température de la conduite à une température supérieure à la température de formation et/ou d'agglomération des hydrates, à une pression donnée.

Une troisième approche, fréquemment utilisée, consiste à ajouter un anti-hydrate thermodynamique, par exemple du méthanol, ou du glycol, dans les fluides produits contenant le mélange eau/gaz invité(s) pour déplacer la température d'équilibre de formation des hydrates. Afin d'obtenir une efficacité acceptable, environ 30% en poids d'alcool, par rapport à la quantité d'eau, sont généralement introduits. Cependant, la toxicité du méthanol et la grande quantité d'alcool utilisé conduisent de plus en plus les industriels à adopter une quatrième approche.

Cette quatrième solution consiste à ajouter un additif à faible dosage, appelé LDHI (« Low Dosage Hydrate Inhibitor ») dans les fluides produits comprenant le mélange eau/gaz invité(s). Cet additif est également appelé anti-hydrate et est introduit à un faible dosage, généralement compris entre 1% et 4% en poids, par rapport au poids de l'eau, étant entendu que des quantités supérieures ou inférieures sont bien entendu possibles. Deux types d'additifs anti-hydrates sont actuellement connus, les anti-agglomérants et les anti-hydrates cinétiques.

La formation d'hydrates dépend principalement de la température et de la pression, ainsi que de la composition du ou des gaz invité(s). Pour pouvoir comparer la performance des additifs, on utilise la notion de sub-cooling. On définit ainsi le sub-cooling (SC) (ou « sous-refroidissement ») par la différence entre la température des fluides produits (ou température d'exploitation T) et la température d'équilibre thermodynamique de formation des cristaux d'hydrates (Téq) pour une pression et une composition des gaz formateurs d'hydrates et de la phase aqueuse données, selon l'équation suivante : SC = T - Téq

Lorsque le sub-cooling est inférieur ou égal à 0°C, il y a risque de formation d'hydrate de gaz.

Les anti-hydrates cinétiques agissent sur la germination et la croissance des cristaux d'hydrates. Ils retardent la formation d'hydrates de plusieurs heures, voire de plusieurs jours.

Cependant, ce type d'inhibiteur d'hydrates agit difficilement à des sub-coolings (SC) inférieurs à -10°C pour une pression donnée. En d'autres termes, le temps d'apparition des cristaux dans ces conditions est suffisamment court, pour qu'ils apparaissent et augmentent la perte de charge dans les conduites de transport des fluides de production pétrolière et gazière.

À l'inverse, les anti-agglomérants n'inhibent pas la formation de cristaux d'hydrates, mais les dispersent sous forme de particules fines, dénommées « slurry » en langue anglaise, ce qui par conséquent empêche leur agglomération. Les hydrates ainsi dispersés génèrent moins, voire ne génèrent plus, de colmatage ou bouchage, comme indiqué précédemment, limitant ainsi la perte de la production des hydrocarbures.

Contrairement aux anti-hydrates cinétiques, les anti-agglomérants permettent d'éviter les problèmes de bouchage et/ou de colmatage comme indiqué précédemment à des sub-coolings (SC) de l'ordre de -15°C à -20°C pour une pression donnée mais sont moins efficaces, voire perdent leur efficacité, à des sub-coolings encore inférieurs.

Par exemple, le document US2012/0161070 propose des compositions chimiques anti-agglomérantes. Cependant, les tests effectués sont limités à un sub-cooling de -17°C. De plus, la synthèse de ces tensioactifs nécessite 4 étapes réactionnelles, si l'on compte également les étapes pour obtenir l'amine grasse à partir de matière première renouvelable constituée de l'acide gras. Limiter le nombre d'étapes de synthèse est important pour limiter le coût, les pertes de rendement, les déchets et les problèmes de qualité.

Le document US2012/0157351 propose également des compositions chimiques anti-agglomérantes. Les tests effectués sont cependant limités à un sub-cooling de -17°C et les autres compositions chimiques proposées ne sont pas efficaces pour disperser les hydrates avec un sub-cooling de -20°C.

Les documents WO 94/24413 et WO 95/19408 divulguent des compositions comprenant des amino-acides carboxyliques pour inhiber la formation d'hydrates

Compte-tenu du milieu d'exploitation (océans, mers), il est de plus en plus fréquent que les anti-agglomérants doivent également présenter une faible écotoxicité, une biodégradabilité satisfaisante et une bioaccumulation faible. Selon les recommandations de CEFAS (Centre for Environment, Fisheries and Aquaculture Science) en accord avec l'OSPAR (Oslo-Paris Commission), pour qu'un additif soit vert, c'est-à-dire compatible avec l'environnement, il faut qu'il remplisse deux des trois conditions suivantes :
1) présenter une écotoxicité (LC50 (effets létaux) et EC50 (effets toxiques) supérieure à 10 mg.L⁻¹ ;
2) présenter une biodégradabilité (OCDE 306) en milieu marin supérieure à 60% ; et
3) présenter une bioaccumulation (Log Pow) (OCDE 117) inférieure ou égale à 3 ou sa masse molaire supérieure à 700 g.L⁻¹.

D'autres pays imposent également 2 de ces conditions sur 3 pour les additifs employés dans la production pétrolière et gazière comme par exemple les inhibiteurs de corrosion, les anti-hydrates cinétiques, les anti-agglomérants, les anti-dépôts minéraux, les désémulsionnants, les déshuilants, les additifs anti-mousse, les inhibiteurs et dispersants de paraffine, les inhibiteurs et dispersants d'asphaltènes, les piégeurs (« scavengers » en langue anglaise) d'hydrogène sulfuré.

Il subsiste par conséquent, un réel besoin de développer un anti-agglomérant, de fabrication aisée, avec un faible nombre d'étapes de synthèse, facilement industrialisable, tout en respectant les recommandations de CEFAS, ou tout au moins, au moins une (1), de préférence au moins deux (2), de préférence encore trois (3) des conditions environnementales citées ci-dessus, et qui soit efficace pour un sub-cooling inférieur ou égal à -20°C, c'est-à-dire pour une différence de température entre la température d'extraction, ou d'exploitation, et la température d'équilibre thermodynamique à laquelle se forme les cristaux d'hydrates, égale ou inférieure à -20°C.

La Demanderesse a maintenant découvert de manière surprenante qu'une composition, comprenant un ou plusieurs aminoacides carboxyliques de structure particulière et un ou plusieurs tensioactifs non ioniques, permettait de répondre aux objectifs définis ci-dessus.

La présente invention a donc pour premier objet une composition comprenant :
(i) un ou plusieurs composés amino-acides carboxyliques de formule (I), et ses sels, 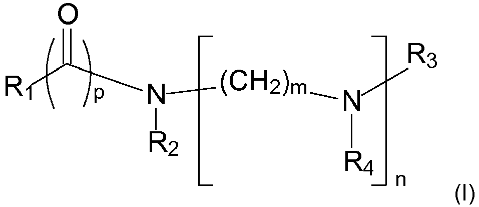 dans laquelle,
   R₁ représente une chaîne alkyle, linéaire ou ramifiée, saturée ou insaturée, en C₆ à C₃₀, ladite chaîne pouvant également être interrompue par un ou plusieurs cycles hydrocarbonés,
   R₂ représente un atome d'hydrogène ou un groupement -(CHRₐ-CHR_{b})-COOR₅, avec Rₐ et R_{b}, identiques ou différents, représentant, indépendamment l'un de l'autre, un atome d'hydrogène ou un groupe méthyle,
   R₃ représente un atome d'hydrogène ou un groupement -(CHRₐ-CHR_{b})-COOR₆, avec Rₐ et R_{b}, identiques ou différents, représentant, indépendamment l'un de l'autre, un atome d'hydrogène ou un groupe méthyle,
   R₄ représente un atome d'hydrogène ou un groupement -(CHRₐ-CHR_{b})-COOR₇, avec Rₐ et R_{b}, identiques ou différents, représentants indépendamment l'un de l'autres un atome d'hydrogène ou un groupe méthyle,
   R₅, R₆ et R₇, identiques ou différents, représentants indépendamment les uns des autres, un atome d'hydrogène ou une chaîne alkyle, linéaire ou ramifiée, saturée ou insaturée, en C₁ à C₁₂,
   étant entendu qu'au moins un des radicaux R₂, R₃ ou R₄ comporte une fonction acide carboxylique (-COOH),
   m représente un entier allant de 1 à 6, et
   n représente un entier allant de 0 à 10 ; et
   p est égal à 0 ou 1, de préférence p est égal à 0, et
(ii) un ou plusieurs tensioactifs non ioniques.

La composition selon l'invention empêche ou limite l'agglomération des hydrates de gaz et reste efficace pour des sub-coolings inférieurs ou égaux à -20°C. Elle permet notamment de travailler à des températures plus basses que les températures actuelles tout en augmentant le rendement d'extraction des hydrocarbures fluides, de faciliter la complétion ou le forage à des basses températures et fortes pressions tout en limitant l'impact sur l'environnement.

Ainsi, la composition selon l'invention est une formulation anti-hydrate, et plus spécifiquement la présente invention concerne une formulation apte à empêcher ou limiter l'agglomération des hydrates de gaz, la dite formulation comprenant :
(i) un ou plusieurs composés de formule (I) telle que définie ci-dessus, et ses sels, et
(ii) un ou plusieurs tensioactifs non ioniques.

Par ailleurs, la préparation de l'aminoacide carboxylique de formule (I) nécessite peu d'étapes de synthèse et est ainsi facilement industrialisable avec des coûts de fabrication relativement peu élevés.

La présente invention a également pour objet un procédé pour limiter, voire empêcher, la formation et/ou l'agglomération d'hydrates de gaz, comportant une étape d'ajout d'une composition telle que définie ci-dessus, dans un fluide de production comprenant une phase aqueuse et un ou plusieurs gaz.

Enfin, la présente invention porte sur l'utilisation d'une composition telle que définie ci-dessus pour limiter, voire empêcher la formation et/ou l'agglomération d'hydrates de gaz, et de préférence dans un procédé d'extraction de pétrole et/ou de gaz et/ou de condensats.

Dans ce qui va suivre, et à moins d'une autre indication, les bornes d'un domaine de valeurs sont comprises dans ce domaine, notamment dans les expressions « compris entre » et « allant de ... à ... ».

D'autres objets, caractéristiques, aspects et avantages de l'invention apparaîtront encore plus clairement à la lecture de la description et des exemples qui suivent.

### La composition

### Le composé de formule (I)

La composition selon la présente invention comprend un ou plusieurs composés de formule (I), tels que définis ci-dessus.

De préférence, m est un entier allant de 2 à 4, et plus préférentiellement, m est égal à 2 ou 3.

De préférence, n est un entier allant de 0 à 4, et plus préférentiellement n est égal à 0, 1 ou 2.

De préférence, tous les radicaux Rₐ et R_{b} sont identiques ou différents, et plus préférentiellement tous les radicaux Rₐ sont identiques et tous les radicaux R_{b} sont identiques. Mieux encore tous les radicaux Rₐ et R_{b} sont identiques et de manière tout à fait préférée, tous les radicaux Rₐ et R_{b} représentent chacun l'atome d'hydrogène.

Selon un premier mode de réalisation préféré de l'invention, p est égal à 0, R₂ représente un groupement -(CH₂)₂-COOR₅, R₃ représente un groupement -(CH₂)₂-COOR₆ et R₄ représente un groupement -(CH₂)₂₋COOR₇, avec R₅, R₆ et R₇, identiques ou différents, représentant, indépendamment les uns des autres, l'atome d'hydrogène ou une chaîne alkyle, linéaire ou ramifiée, saturée ou insaturée, en C₁ à C₁₂, au moins un des radicaux R₅, R₆ et R₇ représente l'atome d'hydrogène.

Plus particulièrement, R₅, R₆ et R₇ sont identiques et représentent chacun l'atome d'hydrogène.

Selon un second mode de réalisation avantageux de l'invention, n est égal à 0, p est égal à 0,
R₁ représente une chaîne alkyle linéaire ou ramifiée, saturée ou insaturée en C₈ à C₁₈, de préférence en C₁₀ à C₁₈, plus préférentiellement en C12 à C₁₈,
R₂ représente l'atome d'hydrogène,
R₃ représente un groupement -(CHRₐ-CHR_{b})-COOR₆, avec Rₐ et R_{b}, identiques ou différents, représentant indépendamment l'un de l'autre l'atome d'hydrogène ou le groupe méthyle, de préférence Rₐ et R_{b} étant identiques et représentant chacun l'atome d'hydrogène, et R₆ représentant l'atome d'hydrogène.

Selon un troisième mode de réalisation avantageux de l'invention, p est égal à 0, n est égal à 0, R₁ représente une chaîne alkyle linéaire ou ramifiée, saturée ou insaturée en C₈ à C₁₈, de préférence en C₁₀ à C₁₈, plus préférentiellement en C₁₂ à C₁₈,
R₂ représente l'hydrogène ou un groupement -(CHRₐ-CHR_{b})-COOR₅, avec Rₐ et R_{b}, identiques ou différents, représentant indépendamment l'un de l'autre l'atome d'hydrogène ou le groupe méthyle, de préférence Rₐ et R_{b} étant identiques et représentant chacun l'atome d'hydrogène, et R₅ représentant l'atome d'hydrogène, R₃ représente un groupement -(CHRₐ-CHR_{b})-COOR₆, avec Rₐ et R_{b}, identiques ou différents, représentant indépendamment l'un de l'autre l'atome d'hydrogène ou le groupe méthyle, de préférence Rₐ et R_{b} étant identiques et représentant chacun l'atome d'hydrogène, et R₆ représentant l'atome d'hydrogène.

Selon un mode de réalisation, lorsque p est égal à 1, alors R₂ représente l'atome d'hydrogène, et de préférence n est différent de zéro (0).

Selon un quatrième mode de réalisation avantageux de l'invention, R₁ représente une chaîne alkyle, telle que définie ci-dessus, c'est-à-dire une chaîne alkyle linéaire ou ramifiée, saturée ou insaturée, en C₆ à C₃₀, interrompue par un ou plusieurs groupements divalent -C(=O)-NH-, le groupement divalent ne pouvant de préférence pas être en position terminale de la chaîne alkyle. De préférence, la chaîne alkyle est interrompue par un groupement divalent -C(=O)-NH-.

Les sels des composés de formule (I), utilisables selon la présente invention, peuvent notamment être des anions carboxylates et/ou des cations sur le ou les atomes d'azote.

Les contre-ions de ces sels peuvent être par exemple, et de manière non limitative, des ions alcalins (par exemple sodium, potassium), des ions alcalino-terreux (par exemple calcium, magnésium), des ammoniums, des phosphoniums, des halogénures (par exemple chlorure, bromure, iodure), sulfate, hydrogénosulfate, mésylate, des carboxylates, des hydrogénocarbonates, des carbonates, des phosphonates ou des phosphates.

Les composés de formule (I) utilisables dans le cadre de la présente invention sont connus et disponibles dans le commerce. De préférence, le composé de formule (I) peut notamment être le N-cocoyl-β-aminopropanoïque, le N-cocoyl-β-aminodipropanoïque, et leurs mélanges le N-tallow-β-aminopropanoïque, le N-tallow-β-aminodipropanoïque, et leurs mélanges.

Ces composés présentent l'avantage d'être aisément synthétisables à partir de modes opératoires connus de l'homme du métier, c'est-à-dire d'être obtenus à partir d'une synthèse présentant peu d'étapes

La composition comprenant le composé de formule (I) est utilisée en une quantité allant de préférence de 0,1% à 10% en poids, plus préférentiellement de 0,3% à 8% en poids, et mieux encore de 0,4% à 4% en poids, par rapport au poids total de la phase aqueuse dans un fluide de production.

La teneur en phase aqueuse pourra être mesurée sur un échantillon du fluide de production par décantation, selon les techniques connues de l'homme du métier.

### Les tensioactifs non-ioniques

La composition selon la présente invention comprend en outre un ou plusieurs tensioactifs non ioniques.

Les tensioactifs non ioniques utilisables dans la composition selon l'invention sont avantageusement choisis parmi les esters, tels que glycérol, les sucres et dérivés de sucres (par exemple sorbitol, sorbitane, isosorbide), et d'acides linéaires ou ramifiés, saturés ou insaturés, en C₈ à C₃₀, de préférence en C₈ à C₂₄, et plus préférentiellement en C₁₀ à C₂₀, les acides gras alkoxylés (par exemple éthoxylés), et les alcools gras alkoxylés (par exemple éthoxylés, comme par exemple le cardanol éthoxylé,)

Par esters, on entend au sens de la présente invention des monoesters, des diesters ou des triesters.

Selon un mode de réalisation préféré de l'invention, le ou les tensioactifs non ioniques sont choisis parmi les esters de sorbitane, les esters de sorbitane alkoxylés (par exemple éthoxylés), les acides gras alkoxylés (par exemple éthoxylés), et les alcools gras alkoxylés (par exemple éthoxylés, comme par exemple le cardanol éthoxylé,) chacune des espèces alkoxylés listées précédemment comprenant avantageusement de 1 à 25 motifs oxyéthylénés (OE).

La ou les chaînes grasses présentes sur les tensioactifs non ioniques sont des chaînes grasses, linéaires ou ramifiées, saturées ou insaturées, et comportent chacune de 6 à 30 atomes de carbone, de préférence de 8 à 20 atomes de carbone.

Plus particulièrement, le ou les tensioactifs non ioniques présents dans la composition selon l'invention sont avantageusement choisis parmi le monolaurate de sorbitane, le monopalmitate de sorbitane, le monostéarate de sorbitane, le monooléate de sorbitane, le sesqui-oléate de sorbitane, le tri-oléate de sorbitane, l'isostéarate de sorbitane et leurs mélanges, et de préférence parmi le monolaurate de sorbitane, le monostéarate de sorbitane et leurs mélanges.

À titre d'exemples de produits commerciaux utilisables, on peut notamment citer les produits vendus par la société Croda sous la dénomination Span 20^{®} (monolaurate de sorbitane) ou Span 60^{®} (monostéarate de sorbitane).

La quantité totale du ou des tensioactifs non ioniques, présents dans la composition selon l'invention, va de préférence de 0,5% à 15% en poids, et plus préférentiellement de 1% à 10% en poids, par rapport au poids total de la composition.

### Les solvants organiques

La composition selon la présente invention peut éventuellement comprendre en outre un ou plusieurs solvants organiques.

De préférence, le ou les solvants organiques, présents dans la composition selon l'invention, sont choisis parmi les alcools inférieurs en C₁ à C₄, les glycols, les éthers de glycol et leurs mélanges, plus préférentiellement parmi le méthanol, l'éthanol, l'iso-propanol, le n-butanol, l'iso-butanol, l'éthylène glycol (ou monoéthylèneglycol), le 1,2-propylène glycol, le 1,3-propylène glycol, l'hexylène glycol, le butylglycol, l'éthylène glycol dibutyl éther, la méthyléthylcétone, la méthylisobutylcétone, la diisobutylcétone, la N-méthylpyrrolidone, la cyclohexanone, les xylènes, le toluène, l'octan-1-ol, l'octan-2-ol et les mélanges de deux ou plusieurs d'entre eux en toutes proportions. De manière tout à fait préférée, le solvant organique est un glycol ou un mélange de plusieurs glycols, par exemple éthylèneglycol, butylglycol, et autres.

La quantité totale du ou des solvants organiques, lorsqu'ils sont présents dans la composition selon l'invention, va de préférence de 20% à 90%, de préférence de 40% à 90%, et plus préférentiellement de 45 à 80% en poids, par rapport au poids total de la composition.

### Les additifs

Selon un autre mode de réalisation, un ou plusieurs additifs bien connus de l'homme du métier peu(ven)t être ajouté(s) à la composition selon l'invention. De tels additifs peuvent par exemple être choisis parmi, à titre non-limitatif, les anti-corrosions, les anti-paraffines, les anti-dépôts minéraux, les anti-asphaltènes, les désémulsionants, les tensio-actifs, et autres et leurs mélanges, comme décrits par exemple dans les documents US7,381,689 et WO2014/0105764, y compris les tensio-actifs cationiques, tels que par exemple sels d'alkyltriméthylammonium quaternaires, les sels d'alkyldiméthylbenzylammonium quaternaires, les sels de dialkyldiméthylammonium quaternaires, les sels d'alkylimidazolinium, les alkylamines et leurs sels, les alkylamido(poly)amines et leurs sels, où alkyl- dénote une chaîne grasse hydrocarbonée (typiquement 8 à 30 atomes de carbone).

Selon un mode de réalisation tout particulièrement préféré, la composition selon l'invention ne comporte pas de composé comportant un motif pipérazine substitué par des radicaux comportant des groupes alkyle gras alcoxylés, par exemple éthoxylés.

### Procédé pour limiter, voire empêcher la formation et/ou l'agglomération d'hydrates de gaz

La présente invention a également pour objet un procédé pour limiter, voire empêcher la formation et/ou l'agglomération d'hydrates de gaz comportant une étape d'ajout d'une composition telle que définie ci-dessus dans un fluide de production comprenant une phase aqueuse et un ou plusieurs gaz.

La teneur totale de la phase aqueuse, présente dans le fluide de production, est généralement comprise entre 10% et 90% en poids, par rapport au poids total du fluide de production, c'est-à-dire par rapport au poids total des fluides (phase aqueuse et hydrocarbures).

La teneur totale en phase aqueuse définie ci-dessus correspond à la proportion totale de phase aqueuse initialement présente dans le fluide de production, c'est-à-dire dans le mélange initial (phase aqueuse et les autres liquides d'extraction bruts tels que les hydrocarbures, les condensats, ...).

La phase aqueuse du fluide de production comprend en outre un ou plusieurs gaz dissous susceptibles de former avec l'eau des hydrates de gaz à une température et à une pression donnée.

Certains des gaz présents dans la phase aqueuse du fluide de production sont les gaz dits « invités », tels que définis précédemment, et comprennent généralement le méthane, l'éthane, le propane, le butane, le gaz carbonique, l'hydrogène sulfuré, et leurs mélanges.

La composition selon l'invention est ajoutée en une quantité allant de préférence de 0,1% à 10% en poids, plus préférentiellement de 0,3% à 8% en poids, et mieux encore de 0,4% à 4% en poids, par rapport au poids total de la phase aqueuse dans un fluide de production.

La composition peut être introduite dans le fluide de production de manière continue, discontinue, régulièrement ou non, ou de manière temporaire, en une ou plusieurs fois. L'introduction de la composition est généralement effectuée en amont de la zone à risque de présence d'hydrates, que ce soit en surface, en tête de puits ou en fond de puits.

Selon un mode de réalisation avantageux, le fluide traité par la composition selon l'invention est une boue de forage ou un fluide de complétion.

Selon ce mode de réalisation, la composition est introduite dans la boue de forage ou dans le fluide de complétion, avant ou pendant l'injection de la boue de forage ou du fluide de complétion.

### Utilisation de la composition

La présente invention a également pour objet l'utilisation d'une composition telle que définie ci-avant pour limiter, voire empêcher la formation et/ou l'agglomération d'hydrates de gaz, et de préférence dans un procédé d'extraction de pétrole et/ou de gaz et/ou de condensats.

Il a en effet été observé, de manière surprenante, que la composition de l'invention permet de limiter, voire empêcher la formation et/ou l'agglomération d'hydrates de gaz, grâce à l'action combinée d'un composé de formule (I) qui peut être considéré comme un tensio-actif amphotère, avec un tensio-actif non-ionique.

Selon un mode de réalisation, la composition selon l'invention est utilisée en une quantité allant de préférence de 0,1% à 10% en poids, plus préférentiellement de 0,3% à 8% en poids, et mieux encore de 0,4% à 4% en poids, par rapport au poids total de la phase aqueuse dans un fluide de production.

L'invention sera mieux comprise à la lumière des exemples suivants, donnés à des fins d'illustration seulement et qui n'ont pas pour but de restreindre la portée de l'invention, définie par les revendications annexées.

### EXEMPLES

Dans les exemples qui suivent, toutes les quantités sont indiquées en pourcentage en poids par rapport au poids total de la composition, à moins d'une autre indication.

### I. 1ere série d'essais

### a) Les compositions

La composition comparative (A1) et la composition selon l'invention (B), ont été préparées à partir des ingrédients dont les teneurs sont indiquées dans le tableau ci-dessous.

| | ***Composition A1 (comparatif)*** | ***Composition B (invention)*** |
|---|---|---|
| Noramium^{®} M2C ⁽¹⁾ | 50 | - |
| Amphoram^{®} CP1-MEG ⁽²⁾ | - | 25 |
| monolaurate de sorbitane SPAN 20 | - | 5 |
| Butyl glycol | 50 | 70 |

| | | |
|---|---|---|
| ⁽¹⁾ chlorure de di-coco-diméthylammonium, commercialisé par CECA S.A. ⁽²⁾ Amphoram^{®} CP1 (comprenant N-cocoylamine, N-cocoyl-β-aminopropanoïque et N-cocoyl-β-aminodipropanoïque) en mélange avec du monoéthylène glycol (MEG) commercialisé par CECA S.A. | | |

### b) Le protocole

Les efficacités des compositions A1 et B comme anti-agglomérant, ont été déterminées sur un fluide modèle représentant un fluide de production comprenant du tétrahydrofurane (THF). Les hydrates de THF se forment à pression atmosphérique et sont régulièrement utilisés pour détecter l'efficacité de composés candidats comme anti-agglomérant d'hydrates de gaz.

Le fluide modèle comprend :
- 50% en poids de phase aqueuse constituée d'un mélange d'eau déminéralisée et de tétrahydrofurane (THF) dans un ratio 1:1, et
- 50% en poids d'iso-octane.

La température d'équilibre thermodynamique de formation d'hydrate de ce fluide modèle est de 2°C à pression atmosphérique. En d'autres termes, les hydrates de THF se forment à des températures inférieures ou égales à 2°C.

L'efficacité anti agglomérante des compositions anti-hydrates a été mesurée à différents sub-coolings (-12°C et -22°C) et pour différents dosages. Le dosage correspond à la quantité de composition anti-hydrate introduite dans la phase aqueuse du fluide de production.

Le sub-cooling représente la différence de température entre la température d'exploitation, ou imposée, et la température d'équilibre thermodynamique de formation d'hydrate du fluide de production. En d'autres termes, pour un sub-cooling de -12°C, la température imposée doit être -10°C. De même, pour un sub-cooling de -22°C, la température doit être -20°C.

Le dispositif expérimental, notamment décrit par M.L. Zanota (M.L. Zanota et coll., Energy & Fuel, 2005, 19(2), (2005), 584-590), est composé d'un moteur qui impose un mouvement d'oscillation à un rack. Le rack contient 12 tubes en verre borosilicaté, ayant un diamètre de 17 mm et une hauteur de 60 mm.

Chaque tube est fermé et contient le mélange décrit ci-dessus ainsi qu'une bille en acier inox 316L de diamètre 0,8 cm. La bille permet d'agiter le mélange, d'observer visuellement l'agglomération des cristaux d'hydrates et constitue une amorce de cristallisation.

Le rack est immergé dans un bain thermostaté, comprenant un mélange eau/éthylèneglycol (1/1), dont la température varie entre -30°C et 30°C grâce à un variostat de marque Huber.

Les différents échantillons sont soumis à des cycles de refroidissement et réchauffement gérés par le variostat programmable. Les vitesses de descente en température sont définies et programmées. Le variostat est muni de deux sondes de température, interne et externe, reliées à un ordinateur permettant de suivre et d'enregistrer la température grâce au logiciel Spy watch 1.1

Les tubes sont divisés en deux groupes de deux :
À des teneurs de 1% en poids :
   Groupe 1 (comparatif) : mélange aqueux + 1% en poids de composition A1, par rapport au poids total de la phase aqueuse
   Groupe 2 (invention) : mélange aqueux + 1% en poids de composition B, par rapport au poids total de la phase aqueuse,
À des teneurs de 3% en poids :
   Groupe 3 (comparatif) : mélange aqueux + 3% en poids de composition A1, par rapport au poids total de la phase aqueuse,
   Groupe 4 (invention) : mélange aqueux + 3% en poids de composition B, par rapport au poids total de la phase aqueuse,

Les tubes ainsi préparés sont placés dans un bain thermostaté à une température de 20°C et sous agitation. La température est ensuite abaissée à -10°C, ce qui correspond à un sub-cooling de -12°C. À cette température,
L'oscillation est maintenue pendant 20 heures (on observe visuellement le mouvement des billes dans les tubes) avant d'être arrêtée. Après deux heures d'arrêt à -10°C, l'agitation est redémarrée, et on observe de nouveau le mouvement des billes dans les tubes.

On descend ensuite la température à -20°C (toujours à raison de -1°C par minute), ce qui correspond à un sub-cooling de -22°C. À cette température de -20°C, l'oscillation est maintenue pendant 20 heures avant d'être arrêtée. Après deux heures d'arrêt à -20°C, l'agitation est redémarrée, et on observe visuellement le mouvement des billes dans les tubes.

L'efficacité de chacune des compositions A1 et B a ensuite été évaluée visuellement en observant le mouvement des billes dans les tubes. Si les billes circulent, le produit testé est efficace. A l'inverse, si les billes restent bloquées, ou si des cristaux d'hydrates sont collés sur la paroi du tube, le produit testé n'est pas un bon anti-agglomérant. Plus le nombre de billes bloquées est important, moins le produit est efficace.

### c) Les résultats

Les résultats de chacun des groupes décrits ci-dessus sont exprimés dans le tableau ci-dessous :

**Tableau 1 : dosage 1%**

| Sub-cooling | ***Nombre de billes bloquées après 20h d'agitation*** | | ***Nombre de billes bloquées après 2h d'arrêt*** | |
|---|---|---|---|---|
| | -12°C | -22°C | -12°C | -22°C |
| Groupe 1 (1% de composition A1) | 2/3 | 3/3 | 3/3 | 3/3 |
| Groupe 2 (1% de composition B) | 0/3 | 0/3 | 0/3 | 0/3 |

**Tableau 2 : dosage 3%**

| Sub-cooling | ***Nombre de billes bloquées après 20h d'agitation*** | | ***Nombre de billes bloquées après 2h d'arrêt*** | |
|---|---|---|---|---|
| | -12°C | -22°C | -12°C | -22°C |
| Groupe 3 (3% de composition A1) | 1/3 | 3/3 | 2/3 | 3/3 |
| Groupe 4 (3% de composition B) | 0/3 | 0/3 | 0/3 | 0/3 |

Les résultats ci-dessus montrent que la composition selon la présente invention (groupes 2 et 4) permet de conserver les bonnes propriétés anti-agglomérantes du composé de formule (I) tout en diminuant sa concentration.

L'association d'un tensioactif non ionique avec un composé de formule (I) permet ainsi de travailler à des températures plus basses que les températures actuelles tout en augmentant le rendement d'extraction de pétrole et/ou de gaz, et en limitant l'impact environnemental de l'anti-hydrate compte tenu de sa faible concentration.

### II. 2nde série d'essais

### a) Les compositions

La composition comparative (A2) et la composition selon l'invention B, sont préparées à partir des ingrédients dont les teneurs sont indiquées dans le tableau ci-dessous.

| | ***Composition A2 (comparatif)*** | ***Composition B (invention)*** |
|---|---|---|
| Amphoram CP1-MEG | 50 | 25 |
| monolaurate de sorbitane SPAN^{®} 20 | - | 5 |
| Butylglycol | 50 | 70 |

### b)Le protocole

Le protocole décrit ci-dessus est celui suivi pour cette seconde série d'essais.

Les tubes sont divisés en deux groupes de deux :
À une teneur de 1% :
   Groupe 5 (comparatif) : mélange aqueux + 1% en poids de composition A2, par rapport au poids total de la phase aqueuse
   Groupe 2 (invention) : mélange aqueux + 1% en poids de composition B, par rapport au poids total de la phase aqueuse,
À une teneur de 3% :
   Les tubes sont divisés en six groupes de trois :
   Groupe 7 (comparatif) : mélange aqueux + 3% en poids de composition A2, par rapport au poids total de la phase aqueuse,
   Groupe 4 (invention) : mélange aqueux + 3% en poids de composition B, par rapport au poids total de la phase aqueuse,

### c) Les résultats

Les résultats de chacun des groupes décrits ci-dessus sont exprimés dans le tableau ci-dessous

**Tableau 3 : dosage 1%**

| Sub-cooling | ***Nombre de billes bloquées après 20h d'agitation*** | | ***Nombre de billes bloquées après 2h d'arrêt*** | |
|---|---|---|---|---|
| | -12°C | -22°C | -12°C | -22°C |
| Groupe 5 (1% de composition A2) | 0/3 | 0/3 | 0/3 | 0/3 |
| Groupe 2 (1% de composition B) | 0/3 | 0/3 | 0/3 | 0/3 |

**Tableau 4 : dosage 3%**

| Sub-cooling | Nombre de billes bloquées après 20h d'agitation | | Nombre de billes bloquées après 2h d'arrêt | |
|---|---|---|---|---|
| | -12°C | -22°C | -12°C | -22°C |
| Groupe 7 (3% de composition A2) | 0/3 | 0/3 | 0/3 | 0/3 |
| Groupe 4 (3% de composition B) | 0/3 | 0/3 | 0/3 | 0/3 |

Les résultats ci-dessus montrent que la composition selon la présente invention (groupes 2 et 4) présente de très bonnes propriétés anti-agglomérantes. En effet, comparé au composé de formule (I) seul (i.e. sans tensio-actif non-ionique), la composition selon l'invention conduit à des résultats similaires, en de plus faibles teneurs en principe actif.

L'association d'un tensioactif non ionique avec un composé de formule (I) permet ainsi de travailler à des températures plus basses que les températures actuelles tout en augmentant le rendement d'extraction de pétrole et/ou de gaz, et en limitant l'impact environnemental de l'anti-hydrate compte tenu de sa faible concentration.

## Revendications

1. Composition comprenant :
i) un ou plusieurs composés aminoacides carboxyliques de formule (I), et ses sels, 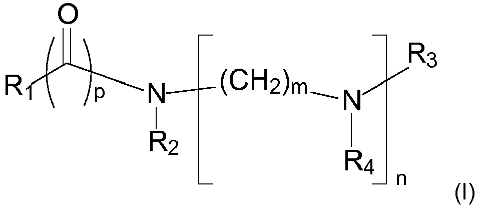 dans laquelle,
R₁ représente une chaîne alkyle, linéaire ou ramifiée, saturée ou insaturée, en C₆ à C₃₀, ladite chaîne pouvant également être interrompue par un ou plusieurs cycles hydrocarbonés,
R₂ représente un atome d'hydrogène ou un groupement -(CHRₐ-CHR_{b})-COOR₅, avec Rₐ et R_{b}, identiques ou différents, représentant, indépendamment l'un de l'autre, un atome d'hydrogène ou un groupe méthyle,
R₃ représente un atome d'hydrogène ou un groupement -(CHRₐ-CHR_{b})-COOR₆, avec Rₐ et R_{b}, identiques ou différents, représentant, indépendamment l'un de l'autre, un atome d'hydrogène ou un groupe méthyle,
R₄ représente un atome d'hydrogène ou un groupement -(CHRₐ-CHR_{b})-COOR₇, avec Rₐ et R_{b}, identiques ou différents, représentants indépendamment l'un de l'autres un atome d'hydrogène ou un groupe méthyle,
R₅, R₆ et R₇, identiques ou différents, représentants indépendamment les uns des autres, un atome d'hydrogène ou une chaîne alkyle, linéaire ou ramifiée, saturée ou insaturée, en C₁ à C₁₂,
étant entendu qu'au moins un des radicaux R₂, R₃ ou R₄ comporte une fonction acide carboxylique (-COOH),
m représente un entier allant de 1 à 6, et
n représente un entier allant de 0 à 10 ; et
p est égal à 0 ou 1, de préférence p est égal à 0, et
ii) un ou plusieurs tensioactifs non ioniques.

2. Composition selon la revendication 1, dans laquelle les composés de formule (I) sont choisis parmi les composés dans lesquels p est égale à 0, R₂ représente un groupement -(CH₂)₂-COOR₅, R₃ représente un groupement -(CH₂)₂-COOR₆ et R₄ représente un groupement -(CH₂)₂-COOR₇, avec R₅, R₆ et R₇, identiques ou différents, représentent, indépendamment les uns des autres, un atome d'hydrogène ou une chaîne alkyle linéaire ou ramifiée, saturée ou insaturée en C₁ à C₁₂, au moins un des radicaux R₅, R₆ et R₇ représente l'atome d'hydrogène.

3. Composition selon la revendication 2, dans laquelle les composés de formule (I) sont choisis parmi les composés dans lesquels R₅, R₆ et R₇ sont identiques et représentent chacun un atome d'hydrogène.

4. Composition selon l'une quelconque des revendications précédentes, dans laquelle les composés de formule (I) sont choisis parmi les composés dans lesquels n est un entier allant de 0 à 4, et de préférence n est égal à 0, 1 ou 2.

5. Composition selon la revendication 1, dans laquelle les composés de formule (I) sont choisis parmi les composés dans lesquels,
n est égal à 0, p est égal à0,
R₁ représente une chaîne linéaire ou ramifiée, saturée ou insaturée en C₈ à C₁₈, de préférence en C₁₀ à C₁₈, plus préférentiellement en C₁₂ à C₁₈,
R₂ représente un atome d'hydrogène, et
R₃ représente un groupement -(CHRₐ-CHR_{b})-COOR₆, avec Rₐ et R_{b}, différents ou identiques, représentant indépendamment l'un de l'autre un atome d'hydrogène ou un groupe méthyle, et R₆ représentant un atome d'hydrogène.

6. Composition selon l'une quelconque des revendications précédentes, dans laquelle le ou les tensioactifs non ioniques sont choisis parmi les esters formés à partir d'alcools et/ou d'alcools alkoxylés et d'acides linéaires ou ramifiés, saturés ou insaturés en C₈ à C₃₀, de préférence en C₈ à C₂₄, et plus préférentiellement en C₁₀ à C₂₀, les acides gras alkoxylés, et les alcools gras alkoxylés.

7. Composition selon l'une quelconque des revendications précédentes, dans laquelle le ou les tensioactifs non ioniques sont choisis parmi le monolaurate de sorbitane, le monopalmitate de sorbitane, le monostéarate de sorbitane, le monooléate de sorbitane, le sesquioléate de sorbitane, le trioléate de sorbitane, l'isostéarate de sorbitane et leurs mélanges, et de préférence parmi le monolaurate de sorbitane, le monostéarate de sorbitane et leurs mélanges.

8. Composition selon l'une quelconque des revendications précédentes, dans laquelle la quantité totale du ou des tensioactifs non ioniques va de 0,5 à 15% en poids, et de préférence de 1 à 10% en poids, par rapport au poids total de la composition.

9. Procédé pour limiter, voire empêcher la formation et/ou l'agglomération d'hydrates de gaz comportant une étape d'ajout d'une composition telle que définie selon l'une quelconque des revendications précédentes, dans un fluide de production comprenant une phase aqueuse et un ou plusieurs gaz.

10. Procédé selon la revendication 9, dans laquelle la composition est ajoutée en une quantité allant de 0,1% à 10% en poids, de préférence allant de 0,3% à 8% en poids, et plus préférentiellement allant de 0,5% à 4% en poids, par rapport au poids de la phase aqueuse du fluide de production.

11. Utilisation d'une composition telle que définie selon l'une quelconque des revendications 1 à 8 pour limiter, voire empêcher la formation et/ou l'agglomération d'hydrates de gaz, et de préférence dans un procédé d'extraction de pétrole et/ou de gaz et/ou de condensats.

12. Utilisation selon la revendication 11, dans laquelle la composition est ajoutée en une quantité allant de 0,1% à 10% en poids, de préférence allant de 0,3% à 8% en poids, et plus préférentiellement allant de 0,5% à 4% en poids, par rapport au poids de la phase aqueuse du fluide de production.

## Patentansprüche

1. Zusammensetzung, umfassend:
i) eine oder mehrere Aminocarbonsäureverbindungen der Formel (I) und Salze davon, 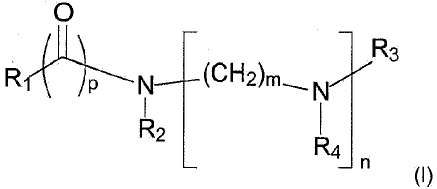 wobei
R₁ für eine lineare oder verzweigte, gesättigte oder ungesättigte C₆- bis C₃₀-Alkylkette steht, wobei die Kette auch durch einen oder mehrere Kohlenwasserstoffringe unterbrochen sein kann,
R₂ für ein Wasserstoffatom oder eine Gruppe -(CHRₐ-CHR_{b})-COOR₅ steht, wobei Rₐ und R_{b} gleich oder verschieden sind und unabhängig voneinander für ein Wasserstoffatom oder eine Methylgruppe stehen,
R₃ für ein Wasserstoffatom oder eine Gruppe -(CHRₐ-CHR_{b})-COOR₆ steht, wobei Rₐ und R_{b} gleich oder verschieden sind und unabhängig voneinander für ein Wasserstoffatom oder eine Methylgruppe stehen,
R₄ für ein Wasserstoffatom oder eine Gruppe -(CHRₐ-CHR_{b})-COOR₇ steht, wobei Rₐ und R_{b} gleich oder verschieden sind und unabhängig voneinander für ein Wasserstoffatom oder eine Methylgruppe stehen,
R₅, R₆ und R₇ gleich oder verschieden sind und unabhängig voneinander für ein Wasserstoffatom oder eine lineare oder verzweigte, gesättigte oder ungesättigte C₁- bis C₁₂-Alkylkette stehen,
mit der Maßgabe, dass mindestens einer der Reste R₂, R₃ oder R₄ eine Carbonsäurefunktion (-COOH) aufweist,
m für eine ganze Zahl von 1 bis 6 steht und
n für eine ganze Zahl von 0 bis 10 steht und
p gleich 0 oder 1 ist, p vorzugsweise gleich 0 ist, und
ii) ein oder mehrere nichtionische Tenside.

2. Zusammensetzung nach Anspruch 1, wobei die Verbindungen der Formel (I) aus den Verbindungen ausgewählt sind, in denen p gleich 0 ist, R₂ für eine Gruppe - (CH₂)₂-COOR₅ steht, R₃ für eine Gruppe - (CH₂)₂-COOR₆ steht und R₄ für eine Gruppe - (CH₂)₂-COOR₇ steht, wobei R₅, R₆ und R₇ gleich oder verschieden sind und unabhängig voneinander für ein Wasserstoffatom oder eine lineare oder verzweigte, gesättigte oder ungesättigte C₁- bis C₁₂-Alkylkette stehen, wobei mindestens einer der Reste R₅, R₆ und R₇ für ein Wasserstoffatom steht.

3. Zusammensetzung nach Anspruch 2, wobei die Verbindungen der Formel (I) aus den Verbindungen ausgewählt sind, in denen R₅, R₆ und R₇ gleich sind und jeweils für ein Wasserstoffatom stehen.

4. Zusammensetzung nach einem der vorhergehenden Ansprüche, wobei die Verbindungen der Formel (I) aus den Verbindungen ausgewählt sind, in denen n eine ganze Zahl von 0 bis 4 ist und n vorzugsweise gleich 0, 1 oder 2 ist.

5. Zusammensetzung nach Anspruch 1, wobei die Verbindungen der Formel (I) aus den Verbindungen ausgewählt sind, in denen:
n gleich 0 ist, p gleich 0 ist,
R₁ für eine lineare oder verzweigte, gesättigte oder ungesättigte C₈-bis C₁₈-, vorzugsweise C₁₀- bis C₁₈- und weiter bevorzugt C₁₂- bis C₁₈-Alkylkette steht,
R₂ für ein Wasserstoffatom steht und
R₃ für eine Gruppe -(CHRₐ-CHR_{b})-COOR₆ steht, wobei Rₐ und R_{b} gleich oder verschieden sind und unabhängig voneinander für ein Wasserstoffatom oder eine Methylgruppe stehen und R₆ für ein Wasserstoffatom steht.

6. Zusammensetzung nach einem der vorhergehenden Ansprüche, wobei das nichtionische Tensid bzw. die nichtionischen Tenside aus Estern aus Alkoholen und/oder alkoxylierten Alkoholen und linearen oder verzweigten, gesättigten oder ungesättigten C₈- bis C₃₀-, vorzugsweise C₈- bis C₂₄- und weiter bevorzugt C₁₀- bis C₂₀-Säuren, alkoxylierten Fettsäuren und alkoxylierten Fettalkoholen ausgewählt ist bzw. sind.

7. Zusammensetzung nach einem der vorhergehenden Ansprüche, wobei das nichtionische Tensid bzw. die nichtionischen Tenside aus Sorbitanmonolaurat, Sorbitanmonopalmitat, Sorbitanmonostearat, Sorbitanmonooleat, Sorbitansesquioleat, Sorbitantrioleat, Sorbitanisostearat und Mischungen davon und vorzugsweise aus Sorbitanmonolaurat, Sorbitanmonostearat und Mischungen davon ausgewählt ist bzw. sind.

8. Zusammensetzung nach einem der vorhergehenden Ansprüche, wobei die Gesamtmenge des nichtionischen Tensids bzw. der nichtionische Tenside im Bereich von 0,5 bis 15 Gew.-% und vorzugsweise 1 bis 10 Gew.-%, bezogen auf das Gesamtgewicht der Zusammensetzung, liegt.

9. Verfahren zur Einschränkung oder sogar Verhinderung der Bildung und/oder Agglomeration von Gashydraten, umfassend einen Schritt des Zugebens einer Zusammensetzung gemäß einem der vorhergehenden Ansprüche zu einem Förderfluid, das eine wässrige Phase und ein oder mehrere Gase umfasst.

10. Verfahren nach Anspruch 9, wobei die Zusammensetzung in einer Menge im Bereich von 0,1 bis 10 Gew.-%, vorzugsweise im Bereich von 0,3 bis 8 Gew.-% und weiter bevorzugt im Bereich von 0,5 bis 4 Gew.-%, bezogen auf das Gewicht der wässrigen Phase des Förderfluids, zugegeben wird.

11. Verwendung einer Zusammensetzung gemäß einem der Ansprüche 1 bis 8 zur Einschränkung oder sogar Verhinderung der Bildung und/oder Agglomeration von Gashydraten, und vorzugsweise bei einem Verfahren zur Förderung von Erdöl und/oder Gas und/oder Kondensaten.

12. Verwendung nach Anspruch 11, wobei die Zusammensetzung in einer Menge im Bereich von 0,1 bis 10 Gew.-%, vorzugsweise im Bereich von 0,3 bis 8 Gew.-% und weiter bevorzugt im Bereich von 0,5 bis 4 Gew.-%, bezogen auf das Gewicht der wässrigen Phase des Förderfluids, zugegeben wird.

## Claims

1. Composition comprising:
i) one or more aminocarboxylic acid compounds of formula (I), and salts thereof: 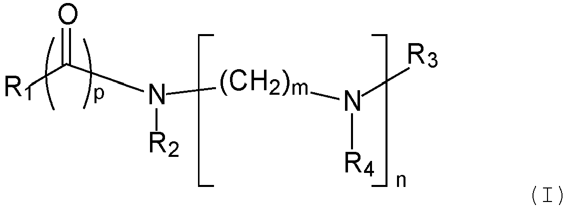 in which:
R₁ represents a linear or branched, saturated or unsaturated C₆ to C₃₀ alkyl chain, said chain also possibly being interrupted with one or more hydrocarbon-based rings,
R₂ represents a hydrogen atom or a group - (CHRₐ-CHR_{b}) - COOR₅, with Rₐ and R_{b}, which may be identical or different, representing, independently of each other, a hydrogen atom or a methyl group,
R₃ represents a hydrogen atom or a group - (CHRₐ-CHR_{b}) - COOR₆, with Rₐ and R_{b}, which may be identical or different, representing, independently of each other, a hydrogen atom or a methyl group,
R₄ represents a hydrogen atom or a group - (CHRₐ-CHR_{b}) - COOR₇, with Rₐ and R_{b}, which may be identical or different, representing, independently of each other, a hydrogen atom or a methyl group,
R₅, R₆ and R₇, which may be identical or different, representing, independently of each other, a hydrogen atom or a linear or branched, saturated or unsaturated C₁ to C₁₂ alkyl chain,
it being understood that at least one of the radicals R₂, R₃ or R₄ includes a carboxylic acid function (-COOH),
m represents an integer ranging from 1 to 6, and
n represents an integer ranging from 0 to 10, and
p is equal to 0 or 1 and preferably p is equal to 0, and
ii) one or more nonionic surfactants.

2. Composition according to Claim 1, in which the compounds of formula (I) are chosen from the compounds in which p is equal to 0, R₂ represents a group -(CH₂)₂-COOR₅, R₃ represents a group - (CH₂)₂-COOR₆ and R₄ represents a group - (CH₂)₂₋COOR₇, with R₅, R₆ and R₇, which may be identical or different, representing, independently of each other, a hydrogen atom or a linear or branched, saturated or unsaturated C₁ to C₁₂ alkyl chain, at least one of the radicals R₅, R₆ and R₇ representing a hydrogen atom.

3. Composition according to Claim 2, in which the compounds of formula (I) are chosen from the compounds in which R₅, R₆ and R₇ are identical and each represent a hydrogen atom.

4. Composition according to any one of the preceding claims, in which the compounds of formula (I) are chosen from the compounds in which n is an integer ranging from 0 to 4, and preferably n is equal to 0, 1 or 2.

5. Composition according to Claim 1, in which the compounds of formula (I) are chosen from the compounds in which
n is equal to 0 and p is equal to 0,
R₁ represents a linear or branched, saturated or unsaturated C₈ to C₁₈, preferably C₁₀ to C₁₈ and more preferentially C₁₂ to C₁₈ chain,
R₂ represents a hydrogen atom, and
R₃ represents a group -(CHRₐ-CHR_{b}) -COOR₆, with Rₐ and R_{b}, which may be identical or different, representing, independently of each other, a hydrogen atom or a methyl group, and R₆ representing a hydrogen atom.

6. Composition according to any one of the preceding claims, in which the nonionic surfactant(s) are chosen from esters formed from alcohols and/or alkoxylated alcohols and from linear or branched, saturated or unsaturated C₈ to C₃₀, preferably C₈ to C₂₄ and more preferentially C₁₀ to C₂₀ acids, alkoxylated fatty acids and alkoxylated fatty alcohols.

7. Composition according to any one of the preceding claims, in which the nonionic surfactant(s) are chosen from sorbitan monolaurate, sorbitan monopalmitate, sorbitan monostearate, sorbitan monooleate, sorbitan sesquioleate, sorbitan trioleate and sorbitan isostearate, and mixtures thereof, and preferably from sorbitan monolaurate and sorbitan monostearate, and mixtures thereof.

8. Composition according to any one of the preceding claims, in which the total amount of the nonionic surfactant(s) ranges from 0.5% to 15% by weight and preferably from 1% to 10% by weight relative to the total weight of the composition.

9. Process for limiting or even preventing the formation and/or agglomeration of gas hydrates, including a step of adding a composition as defined in any one of the preceding claims to a production fluid comprising an aqueous phase and one or more gases.

10. Process according to Claim 9, in which the composition is added in an amount ranging from 0.1% to 10% by weight, preferably ranging from 0.3% to 8% by weight and more preferentially ranging from 0.5% to 4% by weight, relative to the weight of the aqueous phase of the production fluid.

11. Use of a composition as defined in any one of Claims 1 to 8 for limiting or even preventing the formation and/or agglomeration of gas hydrates, and preferably in a process for extracting petroleum and/or gas and/or condensates.

12. Use according to Claim 11, in which the composition is added in an amount ranging from 0.1% to 10% by weight, preferably ranging from 0.3% to 8% by weight and more preferentially ranging from 0.5% to 4% by weight, relative to the weight of the aqueous phase of the production fluid.
